# EUROPEAN PATENT SPECIFICATION

(11) **EP 2 848 990 B1**
(45) Date of publication and mention of the grant of the patent: **23.05.2018**
(21) Application number: 12844663.0
(22) Date of filing: 12.12.2012
(51) Int. Cl.: G06F 3/041, H04N 13/04, G02B 27/22, G02F 1/1333

(54) **A liquid crystal lens grating having touch-control for a three dimensional display and its manufacturing process.**
Ein Flüssigkristalllinsengitter mit Berührungssteuerung für eine dreidimensionale Anzeigevorrichtung und dessen Herstellungsverfahren.
Un réseau de lentille à cristaux liquides et à contrôle tactile pour un système d'affichage à trois dimensions et son procédé de fabrication.

(30) Priority: 03.05.2012 CN 201210134898
(43) Date of publication of application: 18.03.2015
(73) Proprietor: Beijing BOE Optoelectronics Technology Co., Ltd., Beijing 100176 (CN)
(72) Inventor: YANG, Shengji, Beijing 100176 (CN); LIU, Yingming, Beijing 100176 (CN); WANG, Haisheng, Beijing 100176 (CN); WU, Junwei, Beijing 100176 (CN)
(74) Representative: Brötz, Helmut
(86) International application number: PCT/CN2012/086390
(87) International publication number: WO 2013/163882

(56) References cited:
- EP-A2- 2 437 143
- WO-A1-2011/125373
- WO-A1-2011/125373
- CN-A- 102 053 427
- CN-A- 102 262 478
- CN-A- 102 707 514
- CN-U- 202 548 493
- JP-A- 2012 064 027
- TW-A- 201 217 835
- US-A1- 2009 256 818

## Description

### BACKGROUND

Embodiments of the present invention relate to a liquid crystal lens grating having touch control for a three dimensional display, a method of manufacturing the liquid crystal lens grating and a three-dimensional display comprising the liquid crystal lens grating having the touch control.

With the development of display technology, a 3D (three dimensional) display device having an effect of stereoscopic display and a touch screen in support of touch control are increasingly in popularity among consumers. An integrated product which has two functions of 3D display and touch control gets people's attention increasingly.

Currently, a display device which has two functions of 3D display and touch control is usually obtained by an overlapping method, that is, a two-layered electrode for touch control is additionally manufactured over a formed 3D display device after a cell assembly process. Regarding the 3D touch control display device with such a structure, when it is compared with a conventional 3D display device, an overall thickness of the display device is larger. An overlarge cell thickness not only affects the 3D display effect of the display device, but also makes fabrication of the display device more complex, thereby increasing the production cost. The application No. WO2011/125373 A1 discloses a display device including a touch panel and displays stereoscopic images with reducing its thickness and weight. The display device includes a liquid crystal display panel 20, a switching liquid crystal panel 30 and a touch panel 50. The switching liquid crystal panel 30 is provided on a display surface side of the display panel 20 and switches a display mode between two-dimensional display and three-dimensional display. The touch panel 50 is provided on the display surface side of the display panel 20. The touch panel 50 and the switching liquid crystal panel 30 commonly include one common board 32 and are configured as one component. A touch panel transparent electrode 51 and a switching liquid crystal panel transparent electrode 33 are provided on the conunon board 32. The switching liquid crystal panel transparent electrode 33 applies a voltage to liquid crystals of the switching liquid crystal panel 30.

Note that this document discloses the features of the preamble of claim 1.

The US patent applicant No. US 2009/256818A1 discloses a display device including: a plurality of pixels; pixel electrodes; n (n>=2) counter electrodes; a display ftmctionallayer; a write drive scanning portion; detection electrodes; an alternate current drive scmming portion; and a detecting portion.

### SUMMARY

According to embodiments of the invention, there are provided a liquid crystal lens grating having touch control for a three dimensional display according to claim 1, a method of manufacturing the liquid crystal lens grating according to claim 10 and a three-dimensional display comprising the liquid crystal lens grating having the touch control according to claim 8. These are capable of decreasing thickness of the 3D touch control display device and reducing production cost of the product.

strip-shaped electrodes(132) are located, there are identical patterns which includes an external pin bonding part and an alignment mark.

Regarding the liquid crystal lens grating having touch control for a three dimensional display, the method of manufacturing the liquid crystal lens grating and a three-dimensional display comprising the liquid crystal lens grating having the touch control, by means of disposing the touch control electrode between the strip-shaped electrodes and the upper transparent substrate inside the liquid crystal lens grating, and locating the transparent spacer layer between the touch control electrode and the strip-shaped electrodes, while the plane electrode of the lower substrate and the strip-shaped electrodes of the upper substrate form the liquid crystal lens grating, the strip-shaped electrodes that form the liquid crystal lens grating by driving liquid crystal to deflect function as another driving electrode of a touch screen at the same time, so that the strip-shaped electrodes form the touch screen together with the touch control electrode while the 3D display effect is guaranteed by it. In such a way, a two-layered electrode for touch control in prior art can be changed to a single-layered electrode, so as to decrease thickness of the 3D touch control display device, simplify the manufacturing procedure, and reduce the production cost of the product.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
FIG. 1 is a schematically cross-sectional view showing a structure of a a liquid crystal lens grating having touch control for a three-dimensional display provided by an embodiment of the invention;
FIG. 2 is a top view showing a plane electrode and strip-shaped electrodes of the liquid crystal lens grating having touch control for a three-dimensional display provided by an embodiment of the invention;
FIG. 3 is a schematic view showing internal wires of the liquid crystal lens grating having touch control for a three-dimensional display provided by an embodiment of the invention;
FIG. 4 is a schematic view showing the principle of operation of the a liquid crystal lens grating having touch control for a three-dimensional display provided by an embodiment of the invention;
FIG. 5 is a schematically cross-sectional view showing a structure of a three-dimensional display comprising the liquid crystal lens grating having the touch control provided by an embodiment of the invention.

### DETAILED DESCRIPTION

In order to make objects, technical details and advantages of the embodiments of the invention apparent, the technical solutions of the embodiment will be described in a clearly and fully understandable way in connection with the drawings related to the embodiments of the invention. It is obvious that the described embodiments fall within the scope of the appended claims.

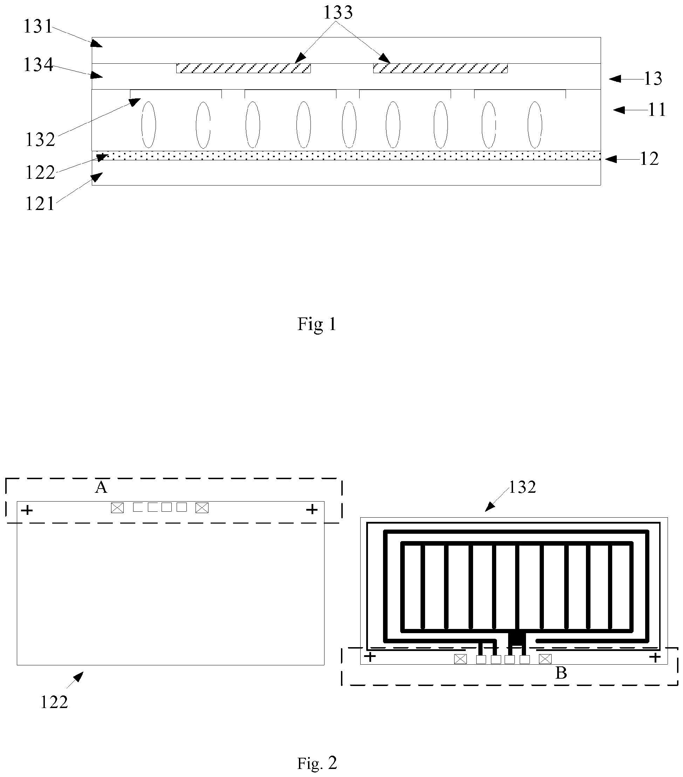

A liquid crystal lens grating having touch control for a three-dimensional display (NB called in the rest of the description "a 3D touch control liquid crystal lens grating") is provided by an embodiment of the invention. As shown in FIG. 1, the 3D touch control liquid crystal lens grating 11 comprises:
a lower substrate 12 and an upper substrate 13 which are bonded to each other by a cell assembly process, the lower substrate 12 including a lower transparent substrate 121 and a plane electrode 122, the upper substrate 13 including an upper transparent substrate 131 and strip-shaped electrodes 132, liquid crystal being filled between the plane electrode 122 and the strip-shaped electrodes 132. At least one touch control electrode 133 is disposed between the upper transparent substrate 131 and the strip-shaped electrodes 132, and a transparent spacer layer 134 is located between the touch control electrode 133 and the strip-shaped electrodes 132.

Optionally, there are two or more touch control electrodes 133 arranged adjacent to each other, and a space is formed between any two adjacent touch control electrodes 133.

With such a 3D touch control liquid crystal lens grating, the touch control electrode is disposed between the strip-shaped electrodes and the upper transparent substrate inside the liquid crystal lens grating, and between the touch control electrode and the strip-shaped electrodes is the transparent spacer layer. While the plane electrode of the lower substrate and the strip-shaped electrodes of the upper substrate are used to form the liquid crystal lens grating, the strip-shaped electrodes for driving the liquid crystal to deflect function as another driving electrode of a touch screen at the same time, so that the strip-shaped electrodes form the touch screen together with the touch control electrode while the 3D display effect is guaranteed by it. In such a way, a two-layered electrode for touch control in prior art can be changed to a single-layered electrode, so as to decrease thickness of the 3D touch control display device, simplify the manufacturing procedure, and reduce the production cost of the product.

In the 3D touch control liquid crystal lens grating provided by the embodiment of the invention, at edges on opposite sides of the plane electrode 122 and a region where the strip-shaped electrodes 132 are located, there are identical patterns formed through the same mask which include an external pin bonding part and an alignment mark. As shown in FIG. 2, a pattern as denoted by a region 'B' in FIG. 2 is formed through a mask at a lower edge of the region where the strip-shaped electrodes 132 are located, in which, the pattern at the center is an external pin bonding part, and the marks at two ends thereof are alignment marks. Likewise, an identical pattern is formed at a lower edge of the plane electrode 122 through the same mask, and the difference lies in that, for positioning and cell-assembling, the plane electrode 122 needs to be rotated by 180° after it is patterned, so the case is that there is a pattern at an upper edge of the plane electrode 122 which is the same as that at the lower edge of the region where the strip-shaped electrodes 132 are located. Thus, the pattern as denoted by a region 'A' in FIG. 2 is obtained. As it is unnecessary for the plane electrode to be connected externally to a pin and the external pin bonding part of the plane electrode serves no function, the plane electrode 122 can be precisely cell-assembled with the upper substrate through the alignment marks at two ends thereof, thereby ensuring quality of the product. As compared to prior art, two masks which are useful for respectively manufacturing an alignment mark of the plane electrode and an external pin bonding part of the strip-shaped electrodes, can be reduced to be one mask , so that fabrication of one mask is omitted, and the production cost is remarkably saved.

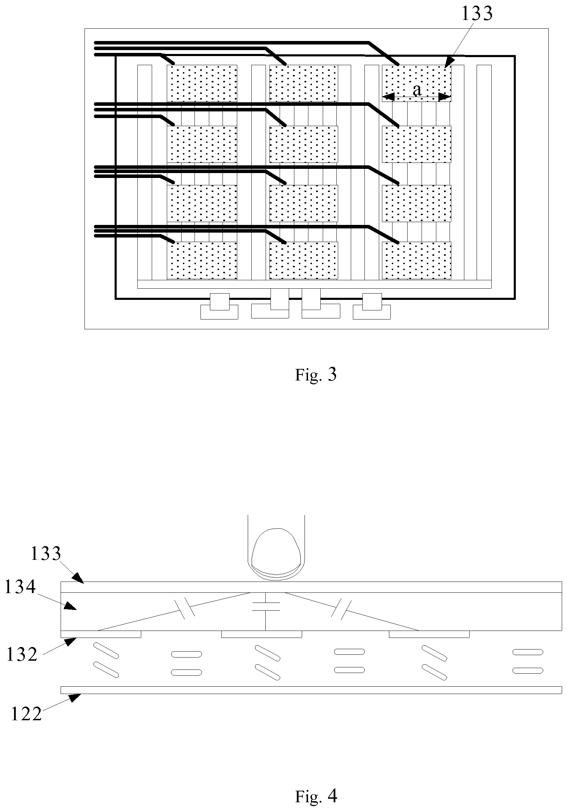

Optionally, as shown in FIG. 3, the following scheme may also be adopted in the 3D touch control liquid crystal lens grating provided by the embodiment of the invention, that is: each touch control electrode 133 adopts an internal wire (that is, a wire is disposed in a display area of a touch control panel, for example, between every two touch control electrodes 133 or around each touch control electrode 133) to gather a touch control signal.

Exemplarily, a touch control electrode in prior art mostly adopts an external wire to gather a touch control signal, a column of touch control electrodes is externally connected to a set of wires, and the number of external wires arranged at a frame of a display device is increased as the column number of the touch control electrodes is increased. When the number of the touch control electrodes is larger, the frame of the display device will become wider, so that appearance of the product is affected and the production cost is increased. When the touch control electrode adopts an internal wire to gather a touch control signal, the size of a glass substrate for a display device can be reduced without affecting its appearance, and width of a frame of the display device is reduced. Because the size of the glass substrate for the display device is reduced, a whole piece of glass substrate can be divided into more small-sized glass substrates for display devices, and the cutting efficiency of the glass substrate is largely enhanced. Thus, the production cost of the product is reduced.

Optionally, the transparent spacer layer 134 may be of a transparent insulating material or a transparent resistance material.

Exemplarily, when the transparent spacer layer 134 is of the transparent insulating material, the touch screen has a capacitive structure. As shown in FIG. 4(the upper transparent substrate 131 is not shown in the figure), an induced electric field is formed between the touch control electrode 133 and the strip-shaped electrodes 132. When a finger touches a surface of the touch screen, coupling capacitances between the touch control electrode 133 and the strip-shaped electrodes 132 will change, and in turn, induced charges on the touch control electrode may change, and a touch position of the finger can be determined by a processing equipment by means of processing the strength of an electric signal obtained by statistics. When the transparent spacer layer 134 is of the transparent resistance material, the touch screen has a resistive structure, and the transparent resistance material functions as a piezoresistor. When a finger touches a surface of the touch screen, change in resistance at a touch position of the finger may lead to change in current at this position, and the touch position of the finger can be determined by a processing equipment by means of processing the strength of an electric signal obtained by statistics.

With the 3D touch control display device having such a structure, the touch control position is detected by detecting the induced charges on the touch screen, where the detection mode is a mode of receiving on all occasions rather than a mode of sending on an occasion and receiving on an occasion, so that detecting speed of the system is largely increased.

In the embodiment of the invention, shape of the touch control electrode 133 can be determined according to shape of the liquid crystal lens grating or practical requirements of use. For example, the touch control electrode 133 may take the shape of a circle, trapezoid or diamond, or may be shown in an irregular shape according to the shape of the display.

Exemplarily, as shown in FIG. 3, the touch control electrode 133 may be shaped in a rectangle, and a long side of the touch control electrode 133 is less than or equal to 6 millimeters. As a current display device mostly is shaped in a rectangle, the rectangular shape of the touch control electrode 133 can largely reduce the area of a clearance region when a large number of touch control electrodes 133 are closely arranged in a plane, so that a touch control blind zone can be avoided from generating.

It is to be noted that, the surface area of the touch control electrode is decreased as its size decreases. As shown in FIG. 4, when a user's finger touches the touch screen, for a touch point of the finger, a touch control electrode with a smaller surface area can provide more reference signals, and the touch point of the user's finger can be positioned more precisely by analyzing the more reference signals. Thus, the precision of touch control recognition can be enhanced. However, in a touch screen with the same area, reduction of the area of the touch control electrode will result in increasing of the number of touch control electrodes, and arrangement of wires for the touch control electrodes will also become more complex, to thereby result in ascending of production cost of the product. Considering that the surface area of a person's finger (which refers to area of the finger in contact with the touch screen upon touch) is approximately within 6 × 6mm², a long side of the touch control electrode 133 can therefore be fabricated to be less than or equal to 6 millimeters. For example, size of the touch control electrode 133 is 5.5 × 5.5mm² (being a square). As such a size of the touch control electrode is smaller than the surface area of the finger, it is possible that a touch point of the same size as the surface area of the finger is ensured to be recognized. As such, ascending of cost of the product is restrained and meanwhile, a high precision recognition of the touch screen is guaranteed.

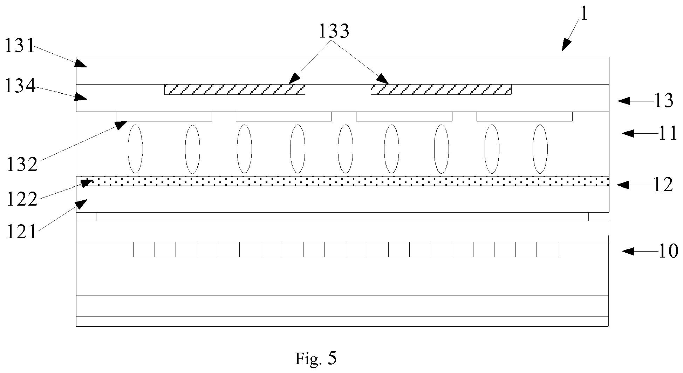

On the other hand, according to an embodiment of the invention, there is further provided a 3D touch control display device 1, as shown in FIG. 5, comprising:

A display panel 10; and a liquid crystal lens grating 11 adhered to a light emitting side of the display panel 10. The liquid crystal lens grating 11 comprises: a lower substrate 12 and an upper substrate 13 which are bonded to each other by a cell assembly process, the lower substrate 12 including a lower transparent substrate 121 and a plane electrode 122, the upper substrate 13 including an upper transparent substrate 131 and strip-shaped electrodes 132, liquid crystal being filled between the plane electrode 122 and the strip-shaped electrodes 132, wherein the upper substrate 13 with the strip-shaped electrodes 132 formed is farther from the display panel 10 compared to the lower substrate with the plane electrode 122 formed. At least one touch control electrode 133 is disposed between the upper transparent substrate 131 and the strip-shaped electrodes 132, and between the touch control electrode 133 and the strip-shaped electrodes 132 is a transparent spacer layer 134. The liquid crystal lens grating 11 may be any of liquid crystal lens gratings as stated by the aforesaid embodiments.

It is to be noted that, the display panel 10 may include a LCD display panel or an organic electroluminescence (OLED) display panel, and may also be an electronic paper panel or other display panel.

Exemplarily, if the display panel 10 is the LCD display panel, then in the display panel 10, a TFT array substrate and a counter substrate are disposed opposite each other so as to form a liquid crystal cell with liquid crystal material filled therein. The counter substrate is such as a color filter substrate. A pixel electrode for each of pixel units of the TFT array substrate acts to apply an electric field for controlling the degree of rotation of liquid crystal material, to thereby perform a display operation. In some examples, the liquid crystal display panel further includes a backlight source for providing the array substrate with backlight.

Another example of the display panel 10 is the organic electro luminescence display device, in which, a pixel electrode for each of pixel units of the TFT array substrate functions as an anode or a cathode for driving an organic light emitting material to emit light, so as to perform a display operation.

Regarding the 3D touch control display device provided by the embodiment of the invention, because the 3D touch control liquid crystal lens grating having such a structure is provided, the touch control electrode is disposed between the strip-shaped electrodes and the upper transparent substrate inside the liquid crystal lens grating, and between the touch control electrode and the strip-shaped electrodes is the transparent spacer layer, while the plane electrode of the lower substrate and the strip-shaped electrodes of the upper substrate are used to form the liquid crystal lens grating, the strip-shaped electrodes that form the liquid crystal lens grating by driving liquid crystal to deflect function as another driving electrode of a touch screen at the same time, and accordingly, the strip-shaped electrodes form the touch screen together with the touch control electrode while the 3D display effect is guaranteed by it. In such a way, a two-layered electrode for touch control in prior art can be changed to a single-layered electrode, so as to decrease thickness of the 3D touch control display device, simplify the manufacturing procedure, and reduce the production cost of the product.

According to another embodiment of the invention, there is provided a method for manufacturing a 3D touch control liquid crystal lens grating, comprising:
S601, a plane electrode is formed on a lower transparent substrate, so as to obtain a lower substrate.

For example, the lower transparent substrate may be a glass substrate, a plastic substrate, or the like, and the plane electrode is formed on the lower transparent substrate by sputtering a transparent conductive material, such as Indium Tin Oxide (ITO) material.

S602, at least one touch control electrode, a transparent spacer layer and strip-shaped electrodes are sequentially formed on an upper transparent substrate, so as to obtain an upper substrate.

The upper transparent substrate may be a glass substrate, a plastic substrate, or the like, and the touch control electrode, the transparent spacer layer and the strip-shaped electrodes can be formed on the upper transparent substrate in sequence by, for example, sputtering, etc.

S603, the upper substrate and the lower substrate are bonded to each other by a cell assembly process to form a cell and liquid crystal is filled in the cell, so as to form the liquid crystal lens grating.

Specifically, the strip-shaped electrode side of the upper substrate and the plane electrode side of the lower substrate are cell-assembled with each other so as to form the liquid crystal lens grating. Wherein, over the plane electrode and the strip-shaped electrodes, there is further formed a liquid crystal alignment film, and liquid crystal molecules are arranged depending on an alignment direction thereof.

With such a method for manufacturing the 3D touch control liquid crystal lens grating, by means of disposing the touch control electrode between the strip-shaped electrodes and the upper transparent substrate inside the liquid crystal lens grating, and locating the transparent spacer layer between the touch control electrode and the strip-shaped electrodes, while the plane electrode of the lower substrate and the strip-shaped electrodes of the upper substrate form the liquid crystal lens grating, the strip-shaped electrodes that form the liquid crystal lens grating by driving liquid crystal to deflect function as another driving electrode of a touch screen at the same time, so that the strip-shaped electrodes form the touch screen together with the touch control electrode while the 3D display effect is guaranteed by it. In such a way, a two-layered electrode for touch control in prior art can be changed to a single-layered electrode, so as to decrease thickness of the 3D touch control display device, simplify the manufacturing procedure, and reduce the production cost of the product.

At edges on opposite sides of the plane electrode and a region where the strip-shaped electrodes are located, there are identical patterns formed through the same mask which include an external pin bonding part and an alignment mark. As shown in FIG. 2, a pattern as denoted by a region 'B' in FIG. 2 is formed through a mask at a lower edge of the region where the strip-shaped electrodes 132 are located, in which, the pattern at the center is an external pin bonding part, and the marks at two ends are alignment marks. Likewise, an identical pattern is formed at a lower edge of the plane electrode 122 through the same mask, and the difference lies in that, for positioning and cell-assembling, the plane electrode 122 needs to be rotated by 180° after it is patterned, so the case is that there is a pattern at an upper edge of the plane electrode 122 which is the same as that at the lower edge of the region where the strip-shaped electrodes 132 are located. Thus, the pattern as denoted by a region 'A' in FIG. 2 is obtained. As it is unnecessary for the plane electrode to be connected externally to a pin and the external pin bonding part serves no function, the plane electrode 122 can be precisely cell-assembled with the upper substrate through the alignment marks at two ends thereof, thereby ensuring quality of the product. As compared to prior art, two masks which are useful for respectively manufacturing an alignment mark of the plane electrode and an external pin bonding part of the strip-shaped electrodes, can be reduced to be one mask, so that fabrication of one mask is omitted, and production cost is remarkably saved.

Optionally, each touch control electrode adopts an internal wire to gather a touch control signal.

Specifically, a touch control electrode in prior art mostly adopts an external wire to gather a touch control signal. As shown in FIG. 4, a column of touch control electrodes is externally connected to a set of wires, and the number of external wires arranged at a frame of a display device is increased as the column number of the touch control electrodes is increased. When the number of the touch control electrodes is larger, the frame of the display device will become wider, so that appearance of the product is affected and production cost is increased. When a touch control electrode adopts such an internal wire to gather the touch control signal, it is possible that the width of a frame for the display device is reduced without affecting its appearance, so as to reduce the production cost of the product.

In addition, the transparent spacer layer may be of a transparent insulating material or a transparent resistance material.

Specifically, when the transparent spacer layer is of the transparent insulating material, the touch screen has a capacitive structure, and an induced electric field is formed between the touch control electrode and the strip-shaped electrodes. When a finger touches a surface of the touch screen, induced charges on the touch control electrode will change, and touch position of the finger can be determined by a processing equipment by means of processing the strength of an electric signal obtained by statistics. When the transparent spacer layer is of the transparent resistance material, the touch screen has a resistive structure, and the transparent resistive material functions as a piezoresistor. When a finger touches a surface of the touch screen, change in resistance at the touch position of the finger will lead to change in current at this position, and the touch position of the finger can be determined by a processing equipment by means of processing the strength of an electric signal obtained by statistics.

With the 3D touch control liquid crystal lens grating having such a structure, the touch control position is detected by detecting induced charges on the touch screen, where a detection mode is a mode of receiving on all occasions rather than a mode of sending on an occasion and receiving on an occasion, so that detecting speed of the system is largely increased.

In the embodiment of the invention, shape of the touch control electrode can be determined according to shape of the liquid crystal lens grating or practical requirements of use. For example, the touch control electrode may take the shape of a circle, trapezoid or diamond, or may be shown in an irregular shape according to the shape of the display.

Exemplarily, the touch control electrode may be shaped in a rectangle, and a long side of the touch control electrode is less than or equal to 6 millimeters. As a current display device mostly is shaped in a rectangle, the rectangular shape of the touch control electrode can largely reduce the area of a clearance region when a large number of touch control electrodes are closely arranged in a plane, so that a touch control blind zone can be avoided from generating.

It is to be noted that, the surface area of the touch control electrode is decreased as its size decreases. As shown in FIG. 4, when a user's finger touches the touch screen, for a touch point of the finger, a touch control electrode with a smaller surface area can provide more reference signals, and the touch point of the user's finger can be positioned more precisely by analyzing the more reference signals. Thus, the precision of touch control recognition can be enhanced. However, in a touch screen with the same area, reduction of the area of the touch control electrode will result in increasing of the number of touch control electrodes, and arrangement of wires for the touch control electrodes will also become more complex, to thereby result in ascending of production cost of the product. Considering that the surface area of a person's finger (which refers to area of the finger in contact with the touch screen upon touch) is approximately within 6 × 6mm², a long side of the touch control electrode 133 can therefore be fabricated to be less than or equal to 6 millimeters. For example, size of the touch control electrode 133 is 5.5 × 5.5mm² (being a square). As such a size of the touch control electrode is smaller than the surface area of the finger, it is possible that a touch point of the same size as the surface area of the finger is ensured to be recognized. As such, ascending of cost of the product is restrained and meanwhile, a high precision recognition of the touch screen is guaranteed.

According to still another embodiment of the invention, there is further provided a method for manufacturing a 3D touch control display device, which comprises the steps (steps S601 to S603) of manufacturing a liquid crystal lens grating according to the above method for manufacturing the 3D touch control liquid crystal lens grating, and besides, further comprises:
S604, the liquid crystal lens grating is adhered to a display panel.

Wherein, the liquid crystal lens grating 11 is adhered to a light emitting side of the display panel 10, and the upper substrate 13 with the strip-shaped electrodes 132 formed is farther from the display panel 10 compared to the lower substrate with the plane electrode 122 formed.

It is to be noted that, the display panel may include a LCD display panel, an OLED display panel, an electronic paper panel or other display panel.

Regarding the method for manufacturing the 3D touch control display device, by means of disposing the touch control electrode between the strip-shaped electrodes and the upper transparent substrate inside the liquid crystal lens grating, and locating the transparent spacer layer between the touch control electrode and the strip-shaped electrodes, while the plane electrode of the lower substrate and the strip-shaped electrodes of the upper substrate form the liquid crystal lens grating, the strip-shaped electrodes that form the liquid crystal lens grating by driving liquid crystals to deflect function as another driving electrode of a touch screen at the same time, so that the strip-shaped electrodes form the touch screen together with the touch control electrode while the 3D display effect is guaranteed by it. In such a way, a two-layered electrode for touch control in prior art can be changed to a single-layered electrode, so as to decrease thickness of the 3D touch control display device, simplify the manufacturing procedure, and reduce the production cost of the product.

It should be understood by those skilled in the art that various changes and modifications may be made in these embodiments within the scope of the appended claims which define the invention.

## Claims

1. A liquid crystal lens grating (11) having touch-control for a three-dimensional display, the liquid crystal lens grating (11) comprising:
a lower substrate assembly (12) including a lower transparent substrate (121) and a first electrode (122) arranged on the lower transparent substrate (121);
an upper substrate assembly (13), which is assembled with the lower substrate assembly (12) to form a cell, the upper substrate assembly (13) including
an upper transparent substrate (131) and second electrodes (132), wherein the second electrodes (132) are strip-shaped electrodes (132) and are arranged on the upper transparent substrate (131);
liquid crystal filled between the first electrode (122) and the strip-shaped second electrodes (132);
wherein at least one touch-control electrode (133) is disposed between the upper transparent substrate (131) and the strip-shaped second electrodes (132), and a transparent spacer layer (134) is disposed between the touch-control electrode (133) and the strip-shaped second electrodes (132);
**characterized in that**:
the first electrode (122) is a plane electrode (122), wherein identical patterns, formed by means of the same mask, comprise an external pin-bonding part and an alignment mark and are disposed on the plane first electrode (122) and on the region where the strip-shaped second electrodes (132) are arranged, such that the identical patterns are disposed at the edges of the plane first electrode (122) and of the region, where the strip-shaped second electrodes are arranged, which oppose each other in the assembled cell.

2. The liquid crystal lens grating (11) according to claim 1, wherein the at least one touch-control electrode (133) is connected to an internal wire that is adapted to receive a touch-control signal from the touch-control electrode (133).

3. The liquid crystal lens grating (11) according to claim 1, wherein the transparent spacer layer (134) is made of a transparent insulating material or a transparent resistive material functioning as a piezoelectric resistor.

4. The liquid crystal lens grating (11) according to claim 1, wherein the at least one touch-control electrode (133) takes the form of a rectangle, and a long side of the at least one touch-control electrode (133) is less than or equal to 6 millimeters.

5. The liquid crystal lens grating (11) according to claim 1, wherein the at least one touch-control electrode (133) takes the form of a circle, trapezoid or diamond.

6. The liquid crystal lens grating (11) according to claim 1, wherein the upper transparent substrate (131) and the lower transparent substrate (121) are glass substrates or plastic substrates.

7. The liquid crystal lens grating (11) according to claim 1, wherein there are two or more than two touch-control electrodes (133), and a gap is arranged between any two adjacent touch-control electrodes (133).

8. A three-dimensional display device (1) having touch-control comprising:
a display panel (10); and
a liquid crystal lens grating (11) having touch-control according to any one of claims 1 to 7, wherein the liquid crystal lens grating (11) is adhered to a light-emitting side of the display panel (10) and wherein the upper substrate assembly (13) with the strip-shaped second electrodes (132) is disposed further away from the display panel (10) than the lower substrate assembly (12) with the plane first electrode (122).

9. The three-dimensional display device (1) according to claim 8, wherein the display panel (10) is an LCD display panel, an organic electroluminescence, that is, an OLED display panel or an electronic paper panel.

10. A manufacturing method of a liquid crystal lens grating (11) having touch-control for a three-dimensional display, comprising:
forming a first electrode (122) on a lower transparent substrate (121) so as to obtain a lower substrate assembly (12);
sequentially forming at least one touch-control electrode (133), a transparent spacer layer (134) and strip-shaped second electrodes (132) on an upper transparent substrate (131) so as to obtain an upper substrate assembly (13); and
assembling the upper substrate assembly (13) with the lower substrate assembly (12) to form a cell, and filling liquid crystal in the cell between the first electrode (122) and the strip-shaped second electrodes (133) so as to form a liquid crystal lens having touch-control (11);
**characterized by**:
forming the first electrode (122) to be a plane first electrode (122), and
forming identical patterns by means of the same mask, the identical patterns comprising an external pin-bonding part and an alignment mark which are disposed on the plane first electrode (122) and on the region where the strip-shaped second electrodes (132) are arranged, such that the identical patterns are disposed at those edges of the plane first electrode (122) and the region where the strip-shaped second electrodes (132) are arranged which oppose each other in the assembled cell.

11. The manufacturing method according to claim 10, wherein the at least one touch-control electrode (133) is connected to an internal wire that is adapted to receive a touch-control signal from the at least one touch-control electrode (133).

12. The manufacturing method according to claim 10, wherein the transparent spacer layer (134) is made of transparent insulating material or a transparent resistive material functioning as a piezoelectric resistor.

13. The manufacturing method according to claim 10, wherein, the at least one touch-control electrode (133) takes the form of a rectangle, and a long side of the at least one touch-control electrode (133) is less than or equal to 6 millimeters.

14. The manufacturing method according to claim 10, wherein over the plane electrode (122) and the strip-shaped electrodes (132), there are further formed liquid crystal alignment film layers.

## Patentansprüche

1. Flüssigkristalllinsengitter (11) mit Berührungssteuerung für eine dreidimensionale Anzeige, wobei das Flüssigkristalllinsengitter (11) umfasst:
eine untere Substratanordnung (12), die ein unteres transparentes Substrat (121) und eine erste Elektrode (122), die auf dem unteren transparenten Substrat (121) angeordnet ist, beinhaltet;
eine obere Substratanordnung (13), die mit der unteren Substratanordnung (12) zur Bildung einer Zelle zusammengesetzt ist, wobei die obere Substratanordnung (13) ein oberes transparentes Substrat (131) und zweite Elektroden (132) beinhaltet, wobei die zweiten Elektroden (132) streifenförmige Elektroden (132) sind und auf dem oberen transparenten Substrat (131) angeordnet sind;
Flüssigkristall, das zwischen die erste Elektrode (122) und die streifenförmigen zweiten Elektroden (132) gefüllt ist;
wobei zumindest eine Berührungssteuerungselektrode (133) zwischen dem oberen transparenten Substrat (131) und den streifenförmigen zweiten Elektroden (132) angeordnet ist und eine transparente Abstandsschicht (134) zwischen der Berührungssteuerungselektrode (133) und den streifenförmigen zweiten Elektroden (132) angeordnet ist;
**dadurch gekennzeichnet, dass**:
die erste Elektrode (122) eine flächige Elektrode (122) ist, wobei identische Muster, die mittels der gleichen Maske gebildet sind, ein externes Pinverbindungsteil und eine Justiermarke aufweisen und auf der flächigen ersten Elektrode (122) und auf der Region, wo die streifenförmigen zweiten Elektroden (132) angeordnet sind, angeordnet sind, so dass die identischen Muster an den Rändern der flächigen ersten Elektrode (122) und der Region, wo die streifenförmigen zweiten Elektroden angeordnet sind, die sich in der zusammengesetzten Zelle gegenüber liegen, angeordnet sind.

2. Flüssigkristalllinsengitter (11) gemäß Anspruch 1, wobei die zumindest eine Berührungssteuerungselektrode (133) verbunden ist mit einer internen Leitung, die geeignet ist, ein Berührungssteuerungssignal von der Berührungssteuerungselektrode (133) zu empfangen.

3. Flüssigkristalllinsengitter (11) gemäß Anspruch 1, wobei die transparente Abstandsschicht (134) aus einem transparenten Isolationsmaterial oder einem transparenten Widerstandsmaterial, das als piezoelektrischer Widerstand wirkt, gebildet ist.

4. Flüssigkristalllinsengitter (11) gemäß Anspruch 1, wobei die zumindest eine Berührungssteuerungselektrode (133) die Form eines Rechteckes einnimmt und eine Längsseite der zumindest einen Berührungssteuerungselektrode (133) weniger als oder gleich 6 Millimeter beträgt.

5. Flüssigkristalllinsengitter (11) gemäß Anspruch 1, wobei die zumindest eine Berührungssteuerungselektrode (133) die Form eines Kreises, eines Trapezes oder einer Raute einnimmt.

6. Flüssigkristalllinsengitter (11) gemäß Anspruch 1, wobei das obere transparente Substrat (131) und das untere transparente Substrat (121) Glassubstrate oder Kunststoffsubstrate sind.

7. Flüssigkristalllinsengitter (11) gemäß Anspruch 1, wobei es zwei oder mehr als zwei Berührungssteuerungselektroden (133) gibt und ein Spalt zwischen je zwei benachbarten Berührungssteuerungselektroden (133) vorgesehen ist.

8. Dreidimensionale Anzeigevorrichtung (1) mit Berührungssteuerung, umfassend:
eine Anzeigetafel (10); und
ein Flüssigkristalllinsengitter (11) mit Berührungssteuerung gemäß einem der Ansprüche 1 bis 7, wobei das Flüssigkristalllinsengitter (11) an einer lichtemittierenden Seite der Anzeigetafel (10) gehalten ist und wobei die obere Substratanordnung (13) mit den streifenförmigen zweiten Elektroden (132) weiter entfernt von der Anzeigetafel (10) angeordnet ist als die untere Substratanordnung (12) mit der flächigen ersten Elektrode (122).

9. Dreidimensionale Anzeigevorrichtung (1) gemäß Anspruch 8, wobei die Anzeigetafel (10) eine LCD-Anzeigetafel, ein Elektrolumineszenz-Schirm, das heißt eine OLED-Anzeigetafel, oder eine elektronische Papiertafel ist.

10. Herstellungsverfahren für ein Flüssigkristalllinsengitter (11) mit Berührungssteuerung für eine dreidimensionale Anzeige, umfassend:
Bilden einer ersten Elektrode (122) auf einem unteren transparenten Substrat (121), um eine untere Substratanordnung (12) zu erhalten;
schrittweises Bilden von zumindest einer Berührungssteuerungselektrode (133), einer transparenten Abstandsschicht (134) und von streifenförmigen zweiten Elektroden (132) auf einem oberen transparenten Substrat (131), um eine obere Substratanordnung (13) zu erhalten; und
Zusammensetzen der oberen Substratanordnung (13) mit der unteren Substratanordnung (12), um eine Zelle zu bilden, und Füllen von Flüssigkristall in die Zelle zwischen die erste Elektrode (122) und die streifenförmigen zweiten Elektroden (133), um eine Flüssigkristalllinse mit Berührungssteuerung (11) zu bilden;
**gekennzeichnet durch**:
Bilden der ersten Elektrode (122), so dass sie eine flächige erste Elektrode (122) ist, und
Bilden von identischen Mustern mittels der gleichen Maske, wobei die identischen Muster ein externes Pinverbindungsteil und eine Justiermarke umfassen, welche auf der flächigen ersten Elektrode (122) und auf der Region, wo die streifenförmigen zweiten Elektroden (132) angeordnet sind, angeordnet sind, so dass die identischen Muster angeordnet sind an solchen Rändern der flächigen ersten Elektrode (122) und der Region, wo die streifenförmigen zweiten Elektroden (132) angeordnet sind, welche sich in der zusammengebauten Zelle gegenüber liegen.

11. Herstellungsverfahren gemäß Anspruch 10, wobei die zumindest eine Berührungssteuerungselektrode (133) verbunden ist mit einer internen Leitung, die geeignet ist, ein Berührungssteuerungssignal von der zumindest einen Berührungssteuerungselektrode (133) zu empfangen.

12. Herstellungsverfahren gemäß Anspruch 10, wobei die transparente Abstandsschicht (134) aus transparentem Isoliermaterial oder einem transparenten Widerstandsmaterial, das als piezoelektrischer Widerstand wirkt, hergestellt ist.

13. Herstellungsverfahren gemäß Anspruch 10, wobei die zumindest eine Berührungssteuerungselektrode die Form eines Rechteckes einnimmt und eine Längsseite der zumindest einen Berührungssteuerungselektrode (133) weniger als oder gleich 6 Millimeter beträgt.

14. Herstellungsverfahren gemäß Anspruch 10, wobei über die flächige Elektrode (122) und die streifenförmigen Elektroden (132) außerdem Flüssigkristallausrichtungsfilmschichten gebildet sind.

## Revendications

1. Un réseau de lentilles à cristaux liquides (11) à commande tactile pour un dispositif d'affichage tridimensionnel, le réseau de lentilles à cristaux liquides (11) comprenant :
un ensemble de substrat inférieur (12) comprenant un substrat transparent inférieur (121) et une première électrode (122) agencée sur le substrat transparent inférieur (121) ;
un ensemble de substrat supérieur (13) qui est assemblé avec l'ensemble de substrat inférieur (12) pour former une cellule, l'ensemble de substrat supérieur (13) comprenant un substrat transparent supérieur (131) et des deuxièmes électrodes (132), dans lequel les deuxièmes électrodes (132) sont des électrodes en forme de bandes (132) et sont agencées sur le substrat transparent supérieur 131) ;
des cristaux liquides remplis entre la première électrode (122) et les deuxièmes électrodes en forme de bandes (132) ;
dans lequel au moins une électrode de commande tactile (133) est disposée entre le substrat transparent supérieur (131) et les deuxièmes électrodes en forme de bandes (132), et une couche d'espacement transparente (134) est disposée entre l'électrode de commande tactile (133) et les deuxièmes électrodes en forme de bandes (132) ;
**caractérisé en ce que** :
la première électrode (122) est une électrode plane (122), dans lequel des motifs identiques, formés au moyen du même masque, comprennent une partie de liaison de broches externe et un repère d'alignement et sont disposés sur la première électrode plane (122) et sur la région où sont agencées les deuxièmes électrodes en forme de bandes (132), de manière à ce que les motifs identiques soient disposés aux bords de la première électrode plane (122) et de la région où sont agencées les deuxièmes électrodes en forme de bandes (132) qui s'opposent dans la cellule assemblée.

2. Le réseau de lentilles à cristaux liquides (11) selon la revendication 1, dans lequel l'au moins une électrode de commande tactile (133) est connectée à un fil interne qui est adapté pour recevoir un signal de commande tactile de l'électrode de commande tactile (133).

3. Le réseau de lentilles à cristaux liquides (11) selon la revendication 1, dans lequel la couche d'espacement transparente (134) est fait d'un matériau isolant transparent ou d'un matériau résistif transparent fonctionnant en tant que résistance piézoélectrique.

4. Le réseau de lentilles à cristaux liquides (11) selon la revendication 1, dans lequel l'au moins une électrode de commande tactile (133) prend la forme d'un rectangle, et un côté long de l'au moins une électrode de commande tactile (133) est inférieur ou égal à 6 millimètres.

5. Le réseau de lentilles à cristaux liquides (11) selon la revendication 1, dans lequel l'au moins une électrode de commande tactile (133) prend la forme d'un cercle, trapèze ou diamant.

6. Le réseau de lentilles à cristaux liquides (11) selon la revendication 1, dans lequel le substrat transparent supérieur (131) et le substrat transparent inférieur (121) sont des substrats de verre ou des substrats de plastique.

7. Le réseau de lentilles à cristaux liquides (11) selon la revendication 1, dans lequel il y a deux électrodes de commande tactile (133) ou plus, et un espace est formé entre deux électrodes de commande tactile (133) adjacentes quelconques.

8. Un dispositif d'affichage tridimensionnel (1) à commande tactile, comprenant :
un panneau d'affichage (10) ; et
un réseau de lentilles à cristaux liquides (11) à commande tactile selon l'une quelconque des revendications 1 à 7, dans lequel le réseau de lentilles à cristaux liquides (11) est lié à un côté d'émission de lumière du panneau d'affichage (10) et dans lequel l'ensemble de substrat supérieur (13) avec les deuxièmes électrodes en forme de bandes (132) est disposé plus éloigné du panneau d'affichage (10) que l'ensemble de substrat inférieur (12) avec la première électrode plane (122).

9. Le dispositif d'affichage tridimensionnel (1) selon la revendication 8, dans lequel le panneau d'affichage (10) est un panneau d'affichage LCD, un panneau d'affichage à électroluminescence organique, c'est-à-dire à DELO ou un panneau de papier électronique.

10. Un procédé de fabrication d'un réseau de lentilles à cristaux liquides (11) à commande tactile pour un dispositif d'affichage tridimensionnel, comprenant :
former une première électrode (122) sur un substrat transparent inférieur (121) de manière à obtenir un ensemble de substrat inférieur (12) ;
former séquentiellement au moins une électrode de commande tactile (133), une couche d'espacement transparente (134) et des deuxièmes électrodes en forme de bandes (132) sur un substrat transparent supérieur (131), de manière à obtenir un ensemble de substrat supérieur (13) ; et
assembler l'ensemble de substrat supérieur (13) avec l'ensemble de substrat inférieur (12) pour former une cellule, et remplir des cristaux liquides dans la cellule entre la première électrode (122) et les deuxièmes électrodes en forme de bandes (133) de manière à former une lentille à cristaux liquides à commande tactile (11) ;
**caractérisé par** :
former la première électrode (122) pour être une première électrode plane (122), et
former des motifs identiques au moyen du même masque, les motifs identiques comprenant une partie de liaison de broches externe et un repère d'alignement qui sont disposés sur la première électrode plane (122) et sur la région où sont agencées les deuxièmes électrodes en forme de bandes (132), de manière à ce que les motifs identiques soient disposés aux bords de la première électrode plane (122) et de la région où sont agencées les deuxièmes électrodes en forme de bandes (132) qui s'opposent dans la cellule assemblée.

11. Le procédé de fabrication selon la revendication 10, dans lequel l'au moins une électrode de commande tactile (133) est connectée à un fil interne qui est adapté pour recevoir un signal de commande tactile de l'au moins une électrode de commande tactile (133).

12. Le procédé de fabrication selon la revendication 10, dans lequel la couche d'espacement transparente (134) est faite d'un matériau isolant transparent ou d'un matériau résistif transparent fonctionnant en tant que résistance piézoélectrique.

13. Le procédé de fabrication selon la revendication 10, dans lequel l'au moins une électrode de commande tactile (133) prend la forme d'un rectangle, et un côté long de l'au moins une électrode de commande tactile (133) est inférieur ou égal à 6 millimètres.

14. Le procédé de fabrication selon la revendication 10, dans lequel sont formées en outre sur l'électrode plane (122) et les électrodes en forme de bandes (132), des couches de film d'alignement de cristaux liquides.
